# EUROPEAN PATENT APPLICATION

(11) **EP 2 249 258 A1**
(43) Date of publication of application: **10.11.2010**
(21) Application number: 09013648.2
(22) Date of filing: 29.10.2009
(51) Int. Cl.: G06F 17/30

(54) **Operating system / electronic device and method for storing or reading a file**

(30) Priority: 06.05.2009 TW 98115029
(71) Applicant: HTC Corporation, Taoyuan County 330 (TW)
(72) Inventor: Foltz, David, Taoyuan City Toayuan County 330 (TW); Chanbai, Sakphong, Taoyuan City Toayuan County 330 (TW)
(74) Representative: Wagner, Karl H.

(57) **Abstract**

An operating system / electronic device and methods for storing or reading a file are provided. In the methods, a path of a file is transformed to generate a hash value. In addition, the hash value is utilized to combine with a filename of the file for storing or reading the file in/from a computer file system.

## Description

### BACKGROUND OF THE INVENTION

### Field of the Invention

The present invention relates to a mapping technique, and more particularly, the present invention relates to a mapping technique that establishes a corresponding relation between files in a hierarchical file system and a flat file system.

### Description of Related Art

A general operating system adopts a file system, such as a Hierarchical File System (HFS) to access files. In such a system, files are under different directories, so that identical filenames can co-exist in different folders without incurring any errors or confusion.

However, in a Flat File System, since all files are stored on the same level, the files must have different filenames from one another to avoid incurring errors.

### SUMMARY OF THE INVENTION

The present invention provides a method for accessing a file originally designed for a Hierarchical File System in a Flat File System.

An operating system / electronic device and methods for storing and reading a file are provided to establish a corresponding relation between files in a Hierarchical File System and a Flat File System.

A file storing method includes reading a file, transforming an original path of the file in a Hierarchical File System to generate a hash value, and utilizing the hash value to combine a filename of the file for generating a recombined filename, thereby storing the file in a Flat File System.

A file reading method includes accepting a reading request, transforming an original path of a file in a Hierarchical File System to generate a hash value, and utilizing the hash value to combine a filename of the file for generating a recombined filename, thereby reading the file from a Flat File System.

An operating system of the present invention includes a Flat File System for storing a file. The operating system also includes a mapping module for transforming a path of the file to generate a hash value, so as to combine the hash value with an original filename of the file for generating a recombined filename to be provided to the Flat File System for storing the file according to the recombined filename.

The aforementioned Flat File System is further used for accepting a reading request, so as to use the recombined filename to read the file.

An electronic device of the present invention includes a storing memory for storing the file and a computing unit to generate said recombined filename, and to stored or read the file in/from the storing memory according to the recombined filename.

For example, the step of transforming the path of the file to generate the hash value is to transform the path to a hexadecimal code by Hash Function, and said path conforms with a path format of the Hierarchical File System.

For example, said operating system is any one of UNIX, Linux, and IBM. The step of reading the file comprises decompressing an application program, and the reading request comprises the path.

To make the above features and advantages of the present invention more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view showing a mapping module mapping a path and a filename of a hierarchical file to a filename of a flat file.

FIG. 2 shows a process of writing a file with a hierarchical file path into a Flat File System.

FIG. 3 shows a process of reading the file transformed by the process in FIG. 2 in the Flat File System.

FIG. 4 shows a process of installing an application program of a Hierarchical File System in a Flat File System.

FIG. 5 shows a process of a Flat File System simulating a Hierarchical File System.

FIG. 6 is another schematic view showing the mapping of a hierarchical file path to a flat file path.

### DESCRIPTION OF EMBODIMENTS

A Hierarchical File System and a Flat File System both have their advantages and disadvantages. For example, for users, naming a file is easy in the Hierarchical File System, while naming a file in the Flat File System is less convenient. On the other hand, under most circumstances, a machine accesses a file with higher efficiency since there is no need to keep on determining the directory in the Flat File System, while in the Flat File System, the efficiency becomes lower. The Flat File System is, for example, UNIX, Linux, or IBM.

It should be noted that an application program in the Hierarchical File System is often unable to be transplanted to the Flat File System and identified and executed by the Flat File System due to path or filename problems. And the program code of the application program has to be rewritten, which is very time-consuming. Similarly, an application program of the Flat File System is often unable to be identified or executed by the Hierarchical File System due to the path or filename problems. A method is provided below, which enables a hierarchical file path and a flat file path to be mutually transformed.

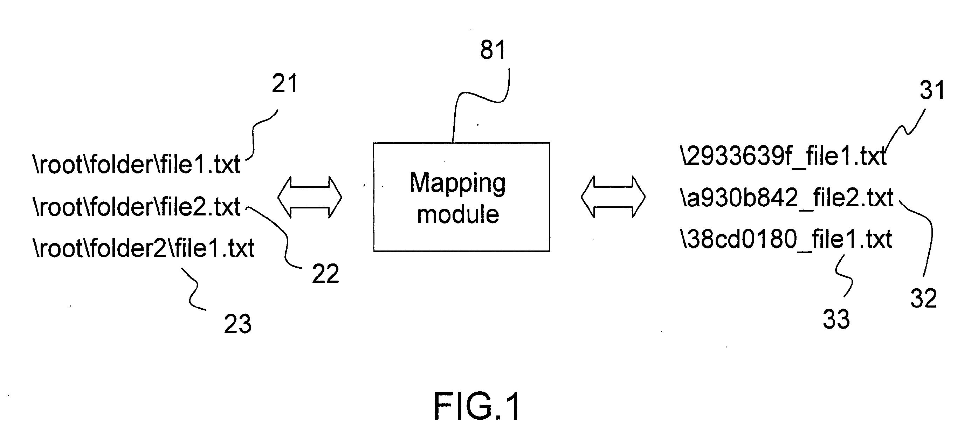

The present invention is used in an electronic device. The device comprises a computing unit and a storing memory. The storing memory stores files, and the computing unit executes an operating system. The operating system comprises a Flat File System and a mapping module. The Flat File System plans the storage of files, while the computing unit executes the mapping module to generate new filenames and relevant computing. FIG. 1 is a schematic view showing the mapping module mapping a path and a filename of a hierarchical file to a filename of a flat file. Referring to FIG. 1, in the Hierarchical File System, file1.txt is stored under the directory of \root\folder; file2.txt is stored under the directory of \root\folder2; and a filename file1.txt is repeated under the directory of \root\folder2. In the Hierarchical File System, files are not misidentified since they are stored under different directories. However, a program storage format may be unable to be identified when a program originally executed in the Hierarchical File System is transplanted to the Flat File System. To solve this problem, a mapping module 81 maps the paths and filenames of hierarchical files 21-23 to the filenames of flat files 31-33. In addition, the mapping module 81 maps the filenames of flat files 31-33 to the paths and the filenames of the hierarchical files 21-23. More specifically, the mapping module 81 is able to generate an only and corresponding flat filename based on the filename of each hierarchical file and the name of the folder in which the hierarchical file is located. Note that the flat file paths 31-33 and the hierarchical file paths 21-23 are one-on-one mapping relation, so that a collision is avoided.

To continue, the mapping module 81 is able to make the filenames of the flat files 31-33 obtained by mapping have the same length. Persons skilled in the art may decide the lengths of the filenames of the flat files 31-33 based on their own need. As the filenames of the flat files 31-33 are made longer, the collision probability between the filenames of the flat files 31-33 is reduced. The description above is a detailed introduction of the mapping module 81. A few applications of the mapping module 81 are provided below.

To simulate a Hierarchical File System in a Flat File System, the following write-in and reading methods are applicable to accessing files of the Hierarchical File System in the Flat File System.

### Write-in Method

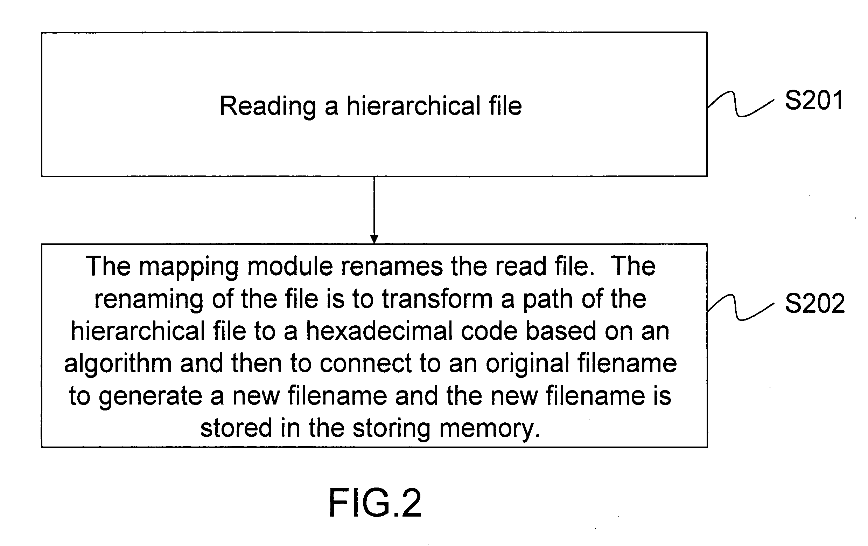

FIG. 2 shows a process of writing files having the paths of the hierarchical files 21-23 and filenames thereof in a Flat File System. To enable the Flat File System to store files of the Hierarchical File System successfully, the mapping module 81 has to transform the paths of the hierarchical files 21-23 and filenames thereof to the filenames of the flat files 31-33. Referring to FIGs. 1 and 2, first a step S201 is to read the hierarchical files 21-23. Next in a step S202, the mapping module 81 renames the files read by said module based on an algorithm, for example, Hash Function, by which the paths of the hierarchical files 21-23 (for example, \root\folder, \root\folder, \root\folder2) are respectively transformed to hexadecimal codes and connected to the original filenames (file1.txt, file2.txt, and file1.txt, for example), and then the new filenames are generated (2933639f_file1.txt, a930b842_ file2.txt , 38cd0180_ file1.txt) and stored in the storing memory.

### Reading Method

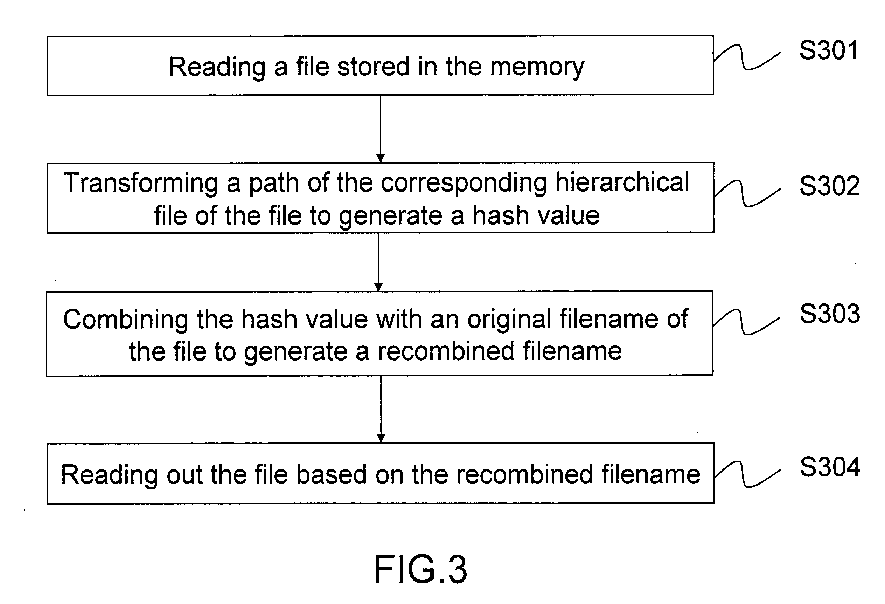

FIG. 3 shows the process of reading the file transformed by the process in FIG. 2 in the Flat File System. Through said write-in method, the files originally stored as hierarchical files are properly transformed to be stored as flat files. Therefore, when programers want to use hierarchical characteristics in the Flat File System, said write-in method has to be used when storing a file. And when reading a file, the following method may be used to set the hierarchical directories as a parameter of a program and substitute the parameter in the program, such that the Hierarchical File System is simulated in the Flat File System. Please refer to FIGs. 1 and 3. After the storing memory successfully transforms files that are able to be identified by the Flat Files System, to know the original filenames in the Hierarchical File System or to use hierarchical characteristics in the Flat File System, shown as FIG. 3, first in a step S301, the Flat File System accepts a reading request. The reading request may be a program command for executing reading a file. When programers want to use hierarchical characteristics of the files, i.e. the paths of the hierarchical files 21-23, the paths of the hierarchical files 21-23 are substituted in the reading request as parameters, so as to designate the path of the file to be read. A step S302 transforms the paths of the hierarchical files 21-23 corresponding to the file to generate a hash value. A step S303 combines the hash value with the original filenames of the hierarchical files 21-23 to be read to generate a recombined filename. A step S304 reads out the file based on the recombined filename. By said write-in method, files originally in the Hierarchical File System are transformed to files that are able to be identified by the Flat File System and to be successfully stored. Said reading method is also used to generate files simulating hierarchical characteristics. And programers may write programs that require being accessed hierarchically in the Flat File System.

To Install an Application Program of a Hierarchical File System in a Flat File System.

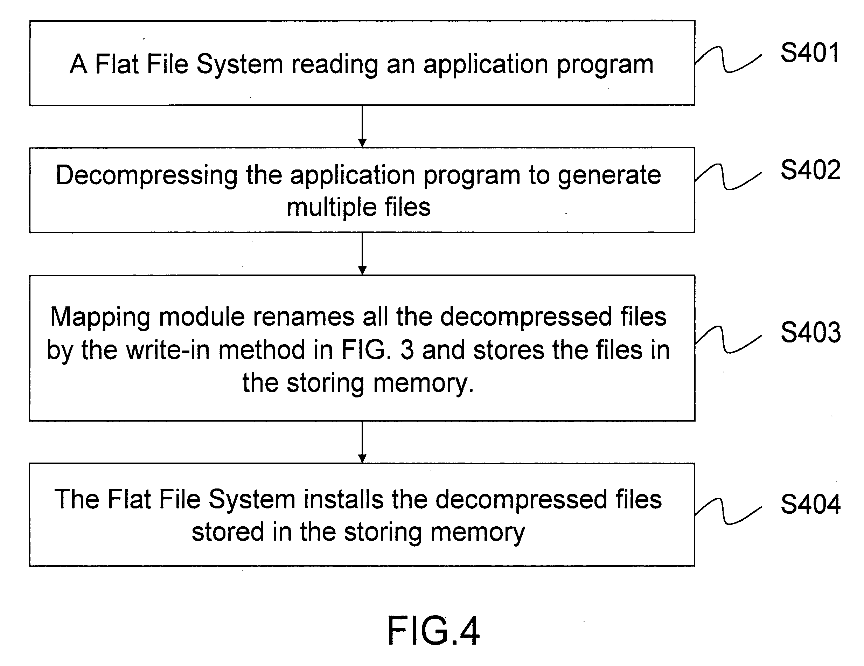

Generally, when a program is installed, a directory is generated hierarchically since the program requires placing a configuration file or a data file. Therefore, to successfully install the program originally installed in the Hierarchical File System in the Flat File System, the following method is used. FIG. 4 shows the process of installing an application program of the Hierarchical File System in the Flat File System. Please refer to FIGs. 1 and 4. Starting with a step S401, the Flat File system reads an application program. Next is a step S402, which decompresses the application program to generate multiple files. In a step S403, the mapping module 81 renames all the decompressed files by the write-in method in FIG. 3 and stores the files in the storing memory. And in a step S404, the Flat File System installs the decompressed files in the storing memory. Note that during the Flat File System installing the application program, if a path of the Hierarchical File System is found, the path is mapped by the mapping module 81 to become a path of the Flat File System. As a result, the application program of the Hierarchical File System may also be applied in the Flat File System.

To Simulate a Hierarchical File System in a Flat File System

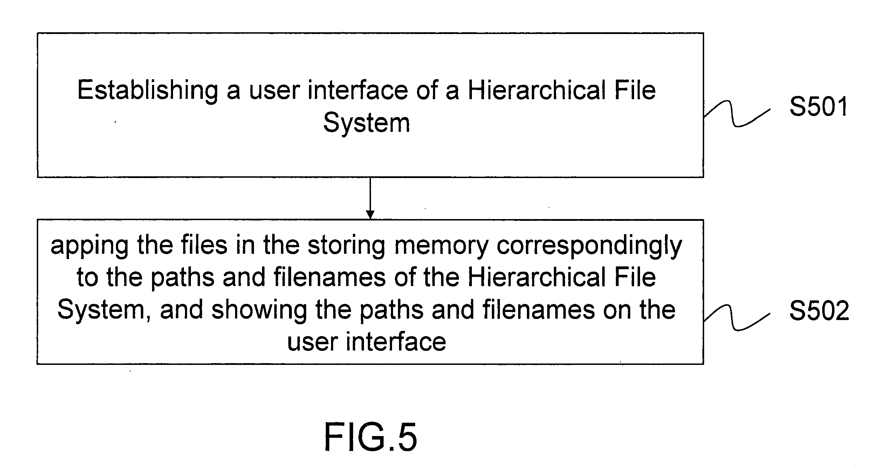

FIG. 5 shows the process of the Flat File System simulating the Hierarchical File System. Please refer to FIGs. 1 and 5. First in a step S501, the Flat File System establishes a user interface of the Hierarchical File System. Next in a step S502, the Flat File System correspondingly maps each of the files in the storing memory to become paths and filenames of the Hierarchical File System by the mapping module 81, and shows the paths and filenames on said user interface. In other words, each of the files is stored in the storing memory based on a stroing method of the flat file system, but users access these files hierarchically through said user interface.

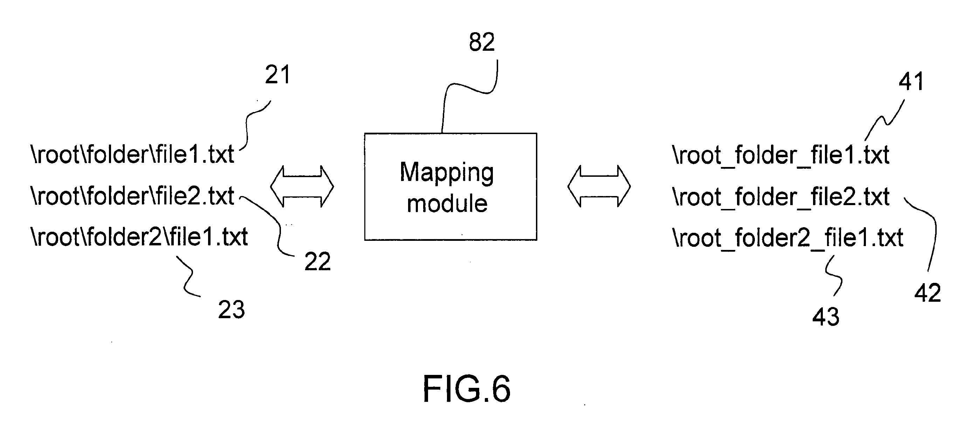

In FIG. 1, the mapping module 81 executes the algorithm based on Hash Function for illustration. Persons skilled in the art may use other algorithms based on their own need. For example, FIG. 6 is another schematic view showing the mapping of a hierarchical file path to a flat file path. Please refer to FIGs. 1 and 6 jointly. The mapping module 81 and a mapping module 82 are similar. The difference lies in that an algorithm executed by the mapping module 82 is different from the algorithm executed by the mapping module 81. However, both of the algorithms belong to Deterministic Algorithm. And flat files 41-43 have filenames with the same or different lengths.

In summary, the mapping module of the present invention is able to map hierarchical files to flat files. Therefore, a program running in the Hierarchical File System is able to be transformed to a program running in the Flat File System. Programers are not required to rewrite the program, so as to enable the program to run in the Flat File System, and thus time and effort are saved.

Although the present invention has been disclosed by the above embodiments, they are not intended to limit the present invention. Anybody skilled in the art may make modifications and variations without departing from the spirit and scope of the present invention. Therefore, the protection range of the present invention falls within the appended claims.

## Claims

1. A file storing method for storing a file in a Flat File System, comprising:
reading the file, the file located in a Hierarchical File System and having a path;
transforming the path to generate a hash value;
combining the hash value with the original filename of the file to generate a recombined filename; and
storing the file based on the recombined filename.

2. The storing method according to claim 1, wherein the step of transforming the path to generate the hash value is based on Hash Function to transform the path to a hexadecimal code.

3. The storing method according to claim 1, wherein the path conforms to a path format of the Hierarchical File System.

4. The storing method according to claim 1, wherein the Flat File System operates in an operating system, and the operating system is any one of UNIX, Linux, and IBM.

5. The storing method according to claim 1, wherein the step of reading the file comprises decompressing an application program.

6. An electronic device, comprising:
a storing memory, for storing a file; and
a computing unit, for transforming a path of the file to generate a hash value, and combining the hash value with an original filename of the file to generate a recombined filename for storing the file based on the recombined filename.

7. The electronic device according to claim 6, wherein the computing unit transforms the path to a hexadecimal code based on Hash Function.

8. The electronic device according to claim 6, wherein the path conforms to a path format of a Hierarchical File System.

9. The electronic device according to claim 6, wherein the computing unit stores the file based on a file format conforming to a Flat File System.
